# EUROPEAN PATENT APPLICATION

(11) **EP 1 575 284 A1**
(43) Date of publication of application: **14.09.2005**
(21) Application number: 05250662.3
(22) Date of filing: 05.02.2005
(51) Int. Cl.: H04N 5/445

(54) **Image recording apparatus capable of timer-recording analog or digital broadcasting signal through one menu screen and method thereof**

(30) Priority: 08.03.2004 KR 2004015630
(71) Applicant: SAMSUNG ELECTRONICS CO., LTD., Gyeonggi-do (KR)
(72) Inventor: Kim, Eung-sun, Yeongtong-gu, Suwon-si Gyeonggi-do (KR)
(74) Representative: Davies, Robert Ean

(57) **Abstract**

An image recording apparatus receiving and storing a broadcasting signal and a method for providing a timer-recording function. The image recording apparatus includes a digital receiver (100) operable to receive a digital broadcasting signal, an analog_receiver (300) operable to receive an analog broadcasting signal, a storage operable to store the digital and analog broadcasting signals, and a controller (360) operable to output a menu screen for receiving a timer-recording information from a user, store the received timer-recording information, receive the broadcasting signal corresponding to one of the digital and analog receivers depending on the timer-recording information, and store the received broadcasting signal in the storage. The menu screen comprises a mode selection item for selecting the digital and analog broadcasting signals, and the controller selectively receives the broadcasting signal from the digital and analog receivers and stores the received broadcasting signal in the storage.

## Description

The present invention relates generally to an image recording apparatus including a video cassette recorder (VCR), a digital video disk (DVD), and a digital broadcast receiver. More particularly, but not exclusively, the present invention relates to an image recording apparatus and method capable of simply timer-recording a received analog or digital broadcasting signal through one menu screen.

A "combination system", which combines more than two devices having independent functions into one system, is referred to as a "combo system" or a "combo" in short. For example, a digital video disk player and video cassette recorder (DVDP/VCR) combo system combines function of the DVDP with that of the VCR.

The DVDP/VCR combo system includes a VCR part and a DVDP part. The VCR part performs functions of the general VCR. This includes, for example, reproducing video and audio previously recorded on a magnetic tape and records on the magnetic tape a signal received from external sources. The DVDP part performs functions of the general DVDP. This includes, for example, reproducing video and audio recorded on a DVD.

In some existing systems, a digital broadcast receiver is also combined with the combo system that includes the DVDP and the VCR. The conventional combo system that includes the DVDP, the VCR, and the digital broadcast receiver has algorithms that performs the functions of each component.

The functions that correspond to each algorithm are displayed through an on-screen display (OSD) function. The OSD presents a selection menu to a user so that the user can select and execute desired functions.

A received analog or digital broadcasting signal is recorded by the VCR part. During this recording process, algorithms of the components are executed respectively for recording the analog broadcasting signal and for recording the digital broadcasting signal.

For example, a timer-recording function requires time information, a block for checking the time information, and a power supply block for recording at a reserved time. The conventional combo system performs the timer-recording function of the components using the algorithms of each component.

Specifically, the VCR part, which receives the analog broadcasting signal, is provided with the time information through the received analog broadcasting signal and a dedicated integrated circuit (IC) (such as video program system (VPS)/program delivery control (PDC)). The VCR algorithm for the timer includes a time information check block (for example, real-time clock (RTC) timer).

The digital broadcast receiver, which receives the digital broadcasting signal, is provided with time information from a satellite. The digital broadcast receiver algorithm includes a time information check block that corresponds to the time information. The time information check requires a power standby mode for each component.

The timer-recording function also requires the display of the menu and the reservation for each component. Taking into account that the analog and digital broadcasting signals, which are received for each component, are recorded on a recording medium by the VCR part, control of the VCR part and reception of the analog and digital broadcasting signals are performed respectively according to related algorithms. Thus, control of the components is complicated and its embodiment is difficult.To overcome or at least address the problems and disadvantages of the above conventional arrangement, an embodiments of the present invention aim to provide a combo system capable of time-recording analog or digital broadcasting signals through one menu screen and a method thereof.

According to a first aspect of the present invention, there is provided an image recording apparatus for receiving and storing a broadcasting signal, comprising: a digital receiver operable to receive a digital broadcasting signal; an analog receiver operable to receive an analog broadcasting signal; a storage device operable to store the digital and analog broadcasting signals; and a controller operable to output a menu screen for receiving a timer-recording information from a user, store the received timer-recording information, receive the broadcasting signal corresponding to one of the digital and analog receivers depending on the timer-recording information, and store the received broadcasting signal in the storage, wherein the menu screen comprises a mode selection item for selecting the digital and analog broadcasting signals, and the controller selectively receives the broadcasting signal from one of the digital and analog receivers and stores the received broadcasting signal in the storage device.

Preferably, the menu screen further comprises items for receiving a broadcast channel, a start time, and a stop time.

According to a second aspect of the present invention, there is provided a method of providing a timer-recording function of an image recording apparatus which receives both digital and analog broadcasting signals and selectively stores the received broadcasting signal, the method comprising the steps of: outputting a menu screen for receiving timer-recording information; selecting one of the digital and analog broadcasting signals; receiving information representing a channel and a recording time; and storing the timer-recording information, receiving and storing the digital or analog broadcasting signal depending on the stored timer-recording information.

For a better understanding of the invention, and to show how embodiments of the same may be carried into effect, reference will now be made, by way of example, to the accompanying diagrammatic drawings in which:
FIG. 1 is a block diagram of a combo system according to an exemplary embodiment of the present invention;
FIGS. 2A and 2B are flowcharts of exemplary timer-recording steps of the combo system of FIG. 1; and
FIGS. 3A and 3B are views of a menu screen of the combo system of FIG. 1.

Reference will now be made in detail to exemplary embodiments of the present invention, examples of which are illustrated in the accompanying drawing figures, wherein like reference numerals refer to the like elements throughout.

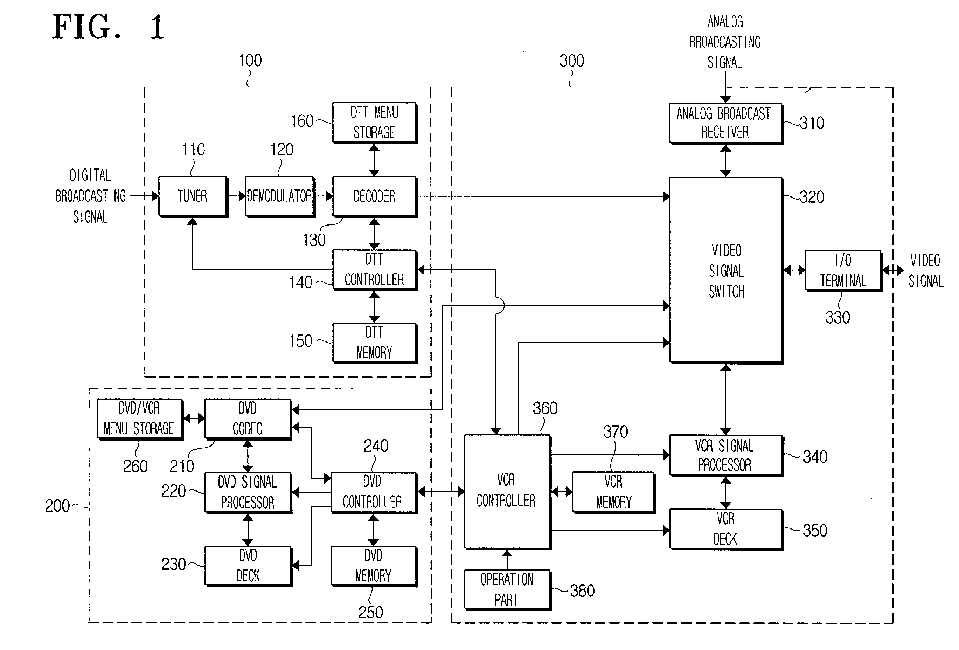

FIG. 1 is a block diagram of a combo system according to an exemplary embodiment of the present invention. Referring to FIG. 1, the combo system includes a digital terrestrial television (DTT) part 100, a digital video disk player (DVD) part 200, and a video cassette recorder (VCR) part 300. It should be appreciated that the embodiments of the present invention described herein are not limited to this exemplary embodiment and that the embodiments of the present invention are applicable to any other combo system which can receive and record analog and digital broadcasting signals.

The DTT part 100 is a set-top box for receiving digital broadcasts. It tunes to and demodulates a digital broadcasting signal received from outside. The DVD part 200 reproduces video data recorded on an optical recording medium, such as a compact disk (CD), or DVD. The VCR part 300 records video data on a magnetic recording medium, such as a VCR tape, and reproduces the recorded video data of the recording medium. The VCR part 300 can tune and demodulate an analog broadcasting signal received from outside.

The DTT part 100, the DVD part 200, and the VCR part 300 are integrally constructed in a single casing. Accordingly, the combo system is a single device in appearance. The combo system can combine a terminal of a user input device and a terminal of an external device.

The DTT part 100, the DVD part 200, and the VCR part 300 can be operated independently from each other or in association with each other. The composite operation includes the situation in which the VCR part 300 records the digital broadcasting signal received to the DTT part 100 and the situation in which the VCR part 300 records the image data reproduced in the DVD part 200.

The combo system is connectable with an external device such as a television and a camcorder. The combo system can output the received broadcasting signal or the reproduced video signal to the external device, or receive and record a video signal from the external device.

The combo system need not to always include the DTT part 100, the DVD part 200, or the VCR part 300. The components 100, 200, and 300 can be respectively connected to, and separated from the combo system so that the user can selectively utilize the components 100, 200 and 300 as needed.

For example, a user who has a television for the digital broadcasts does not need the DTT part 100. Hence, the user can construct the combo system excluding the DTT part 100.

Hereinbelow, the DTT part 100, the DVD part 200, and the VCR part 300 are described in order in greater detail in reference to FIG. 1. The DTT part 100 includes a tuner 110, a demodulator 120, a decoder 130, a DTT controller 140, a DTT memory 150, and a DTT menu storage 160.

The tuner 110 tunes a channel selected by the user among a plurality of digital broadcasting signals. Broadcast signals include, but are not limited to, a terrestrial transmission (e.g., an electromagnetic signal transmitted from a terrestrial station for antenna reception), a satellite transmission (i.e., an electromagnetic signal transmitted from an orbiting satellite), and a cable transmission (e.g., an electromagnetic signal transmitted along a coaxial cable). The demodulator 120 demodulates the digital broadcasting signal output from the tuner 110, and demultiplexes the demodulated signal into a video signal, audio signal and a broadcast information signal.

The decoder 130 decodes the demultiplexed video signal, audio signal, and broadcast information signal. The video and audio signals output from the demodulator 120 are compressed according to a predetermined format. Accordingly, the decoder 130 decompresses and outputs the compressed video and audio signals. In one embodiment of the present invention, the compression format of the video and audio signals is the Moving Picture Experts Group (MPEG).. The video and audio signals, which are output from the decoder 130, are converted to a format reproducible by an external device such as a television, through a DTT converter (not shown).

The decoder 130 decompresses and outputs graphic user interface (GUI) data compressed and stored in the DTT menu storage 160, which will be described in greater detail below.

The DTT controller 140 controls overall operations of the DTT part 100. Specifically, the DTT controller 140 controls the tuning of the tuner 110 and the decoding of the decoder 130. The DTT controller 140 is connected for communication with a VCR controller 360 which will be described below, and operates under the control of the VCR controller 360.

The DTT memory 150 contains drivers and application programs required for the DTT controller 140 and critical data which should be kept even when the power is cut off. The DTT memory 150 can also contain information data on a timer-recording if the timer-recording function is set for the digital broadcasts, which will be described in greater detail.

The DTT menu storage 160 stores the GUI data, such as a menu screen, for the implementation of the GUI environment. If necessary (for example, if data capacity is large), the GUI data can be compressed and stored in a predetermined format. In an embodiment of the present invention, the compression format can be the MPEG or Joint Photographic Experts Group (JPEG) compression format.

Still referring to FIG. 1, the DVD part 200 will now be described in greater detail.

The DVD part 200 includes a DVD coder/decoder (CODEC) 210, a DVD signal processor 220, a DVD deck 230, a DVD controller 240, a DVD memory 250 and a DVD/VCR menu storage 260. The DVD deck 230 reads out data recorded on an inserted CD or DVD. The DVD signal processor 220 processes the data received from the DVD deck 230 and, corrects errors in the received data.

The DVD CODEC 210 compresses the received data in the predetermined format to be recorded and transfers the compressed data to the DVD signal processor 220. Upon receiving the data to be reproduced from the DVD signal processor 220, the DVD CODEC 210 decompresses and outputs the received data. The compression format can be the MPEG format

The decompressed data output from the DVD CODEC 210 is converted to a reproducible format used in an external device such as the television, through a DVD converter (not shown). The DVD CODEC 210 decompresses and outputs the GUI data compressed and stored in the DVDNCR menu storage 260, the operation of which will be described in greater detail below.

The DVD controller 240 controls overall operations of the DVD part 200. Specifically, the DVD controller 240 controls the compression and decompression of the DVD CODEC 210, the signal processing of the DVD signal processor 220, and the recording and reproducing of the DVD deck 230. The DVD controller 240 is connected for communication with the VCR controller 360, and operates under control of the VCR controller 360.

The DVD memory 250 contains drivers and application programs required for the DVD controller 240, and stores critical data which should be kept even when the power is cut off. The DVD/VCR menu storage 260 stores the GUI data relating to the DVD part 200, and the GUI data relating to the VCR part 300. If necessary, the GUI data can be compressed and stored in a predetermined format. The compression format can be the MPEG or the JPEG compression formats.

Still referring to FIG. 1, the VCR part 300 will now be described in greater detail.

The VCR part 300 includes an analog broadcast receiver 310, a video signal switch 320, an input/output (I/O) terminal 330, a VCR signal processor 340, a VCR deck 350, the VCR controller 360, a VCR memory 370, and an operation part 380. The analog broadcast receiver 310 tunes a channel selected by the user among a plurality of received analog broadcasting signals incoming, and demodulates and outputs the tuned broadcasting signal.

The VCR deck 350 records data on the inserted magnetic tape or reads out the recorded data from the magnetic tape. The VCR signal processor 340 converts the data to be transferred to and recorded in the VCR deck 350, in a recordable format on the magnetic tape. The VCR signal processor 340 converts the data received from the VCR deck 350 to be reproduced in a format reproducible by an external device such as a TV.

The video signal switch 320 selectively forwards to the I/O terminal 330 the video signals output from the DTT part 100, the DVD part 200, the analog broadcast receiver 310, and the VCR signal processor 340. The video signal switch 320 selectively forwards the video signal input from the external device through the I/O terminal 330, to the DVD part 200 and the VCR signal processor 340.

The video signal switch 320 can be, in one embodiment of the present invention, a multiplexing (MUX) IC. The video signal switch 320 establishes the forwarding path of the video signals under the control of the VCR controller 360. The video signal is transferred between the external device and the video signal switch 320 through the I/O terminal 320.

The VCR controller 360 controls overall operations of the combo system depending on operation commands input by the user through the operation part 380. The VCR controller 360 is connected for communication with the DTT controller 140 and the DVD controller 240, and controls the operations of the DTT controller 140 and the DVD controller 240. Thus, the VCR controller 360 serves as a main controller, controlling the central functions of the combo system.

If the operation command of the user relates to the VCR part 300, the VCR controller 360 controls the operations of the VCR part 300 according to the user's operation command. Specifically, the VCR controller 360 controls the reception of the analog broadcast receiver 310, the switching of the video signal switch 320, the signal processing of the VCR signal processor 340, and the recording and reproducing of the VCR deck 350.

If the operation command input by the user relates to the DTT part 100 or the DVD part 200, the VCR controller 360 transfers the operation command to the DTT controller 140 or the DVD controller 240. Upon receiving the operation command, the DTT controller 140 or the DVD controller 240 performs the related operations.

The VCR memory 370 contains drivers and application programs required for the VCR controller 360 and critical data which should be stored even when the power is cut off. The VCR memory 370 also contains one or more programs relating to the general functions or the composite functions of the combo system.

The operation part 380 is a user interface for receiving the operation command in relation with the function selection and the operation control of the combo system. The operation part 380 is generally disposed in a front side of the combo system. The operation party 380 can include a remote controller which inputs the operation command of the user and a remote controller receiver for transferring the output signal of the remote controller to the VCR controller 360.

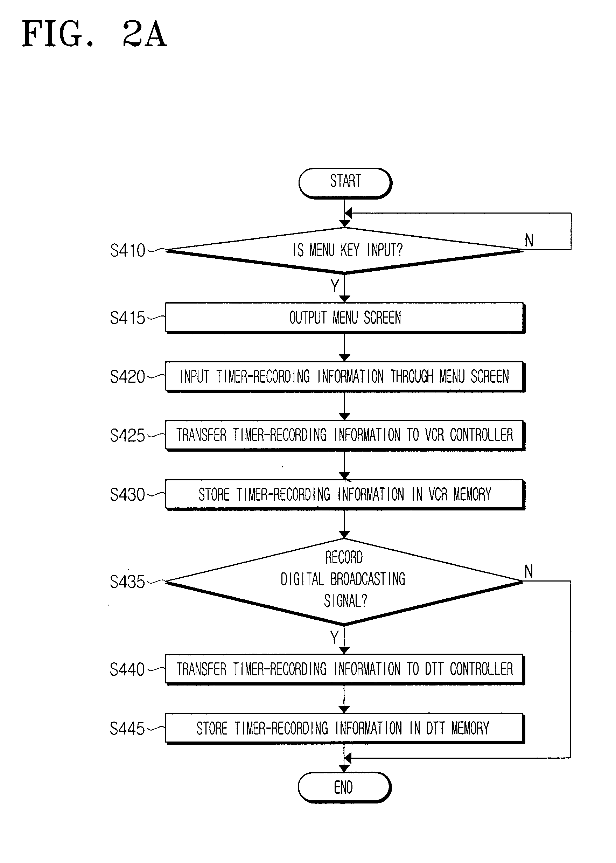

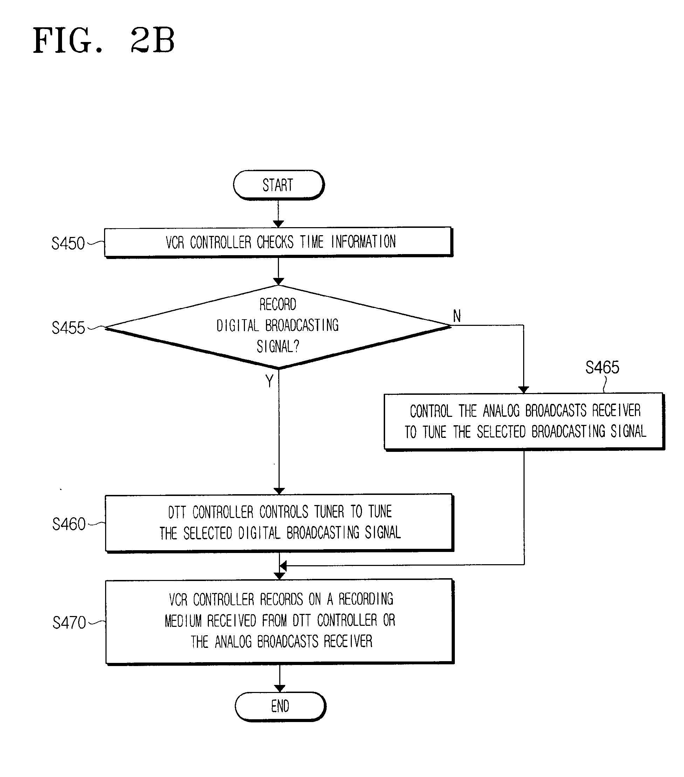

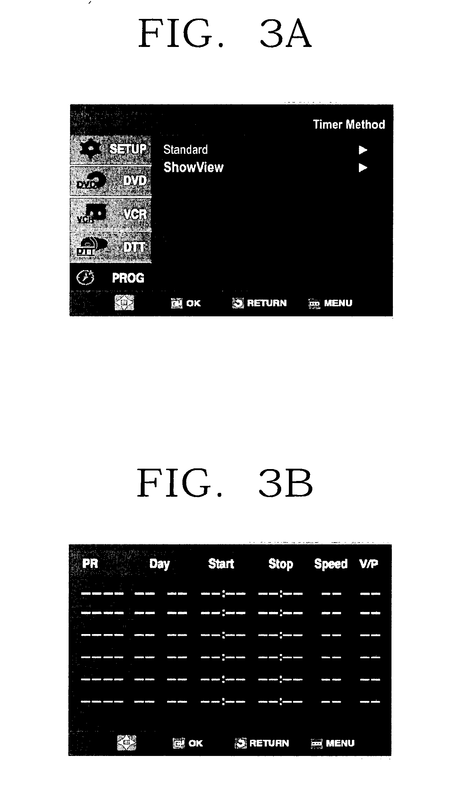

FIGS. 2A and 2B are flowcharts of exemplary timer-recording steps of the combo system of FIG. 1, and FIGS. 3A and 3B are views of a menu screen of the combo system of FIG. 1.

The timer-recording mode of the combo system is classified into two sub-modes. The first sub-mode is a VCR timer-recording mode for timer-recording the analog broadcasting signal and the second sub-mode is a DTT timer-recording mode for timer-recording the digital broadcasting signal. The timer-recording function is performed through a single menu.

The VCR timer-recording mode records the analog broadcasting signal received through the analog broadcast receiver 310. The DTT timer-recording mode records the digital broadcasting signal received through the tuner 110 of the DTT part 100. The timer-recording function of the combo system is controlled by the VCR controller 360 of the VCR part 300.

In reference to FIG. 2A, the timer-recording steps of the combo system will now be described.

The user touches a menu key (not shown) arranged on the operation part 380, thereby causing the combo system to display the menu screen for the timer-recording of the broadcasting signal of the combo system at step S410. When the menu key is selected, the VCR controller 360 receives from the operation part 380 a key signal notifying the input of the menu key, and transmits to the DVD controller 240 a control signal instructing the display of the menu. The DVD controller 240 controls the DVD CODEC 210 to decompress the GUI data stored in the DVD/VCR menu storage 260, and outputs the menu screen as shown in FIG. 2A at step S415.

Referring now to FIG. 3A, at the left side of a main menu screen, a "SETUP" icon represents a sub menu for the environment setup of the combo system, a "DVD" icon represents a sub menu for the function setup of the DVD part 200, a "VCR" icon represents a sub menu for the function setup of the VCR part 300, a "DTT" icon represents a sub menu for the function setup of the DTT part 100, and a "PROG" icon represents a sub menu for entire program setup of the combo system.

To set up the timer-recording of the combo system, when the "PROG" icon on the main menu screen is selected, the sub menu including "Standard" and "ShowView" is displayed. When the "ShowView" is selected, the menu screen is displayed for selecting timer-recording information data of FIG. 3B.

The timer-recording information data includes "PR", "Day", "Start", "Stop", "Speed", and "V/P". In step 420, the user inputs the timer-recording mode and the timer-recording information data on the timer-recording selection menu screen. Specifically, the user initially inputs information on the timer-recording mode at the "PR". The user selects one of the VCR timer-recording mode for the analog broadcasting signal and the DTT timer-recording mode for the digital broadcasting signal. When the "PR" is selected and highlighted on the screen, the "A" that represents the VCR timer-recording mode and the "D" that represents the DTT timer-recording mode can be selected by manipulating the up and down keys of the operation part 380. As a result, the user has determined whether to record the analog broadcasting signal or the digital broadcasting signal, and the timer-recording mode is set up according to the selected broadcasting signal. Then, a broadcast channel is selected depending on the selected timer-recording mode. The broadcast channel to be recorded with respect to the selected analog or digital broadcasting signal can then be selected .

The time and period of the timer-recording are selected at the "Day" portion of the menu screen. For example, a user can select the timer-recording to perform the timer-recording once, daily, weekly, or on a particular day. A start time of the timer-recording is input at the "Start" portion of the menu screen, and a stop time is input at the "Stop" portion of the menu screen. The "Speed" portion of the menu screen determines whether to perform the timer-recording at a normal recording speed or a double or higher recording speed on a recording medium such as the magnetic tape. A PDC mode or a VPS/PDC mode can be selected at the "V/P" portion of the menu screen.

Upon receiving the timer-recording mode and the timer-recording information data from the user, the DVD controller 240 transfers to the VCR controller 360 the timer-recording mode and the timer-recording information data to the VCR controller 360 at step S425. The VCR controller 360 stores into the VCR memory 370 the timer-recording mode and the timer-recording information data into the VCR memory 370 at step S430, and sets up the VCR timer-recording mode for the analog broadcasting signal or the DTT timer-recording mode for the digital broadcasting signal using a separate timer depending on the VPS or VPS/PDC mode. At decision step S435 it is determined whether the DTT timer-recording mode for the digital broadcasting signal is selected. If so, ("Yes" path from decision step S435), the timer-recording information data is transferred to the DTT controller 140 at step S440. The DTT controller 140 stores the timer-recording information data into the DTT memory 150 at step S445, receives the digital broadcasting signal depending on the stored timer-recording information data, and sets up the timer-recording mode to be transferred to the VCR part 300. If it is determined that the digital broadcast signal is not to be recorded at decision step S435, ("No" path from decision step S435), the method according to FIG. 2A terminates.

After setting up the timer-recording mode for the analog or digital broadcasting signal, the timer-recording is performed in reference to FIG. 2B. The VCR controller 360 checks time information provided from the timer and the timer-recording information data stored in the VCR memory 370 at step S450.

The VCR controller 360 determines the timer-recording information data, by determining whether the timer-recording mode is the VCR or DTT timer-recording mode at a certain time before the start time at decision step S455. In the case of the DTT timer-recording mode, ("Yes" path from decision step S455), the VCR controller 360 notifies the DTT controller 140 of the timer-recording start. The DTT controller 140 controls the tuner 110 according to the channel information data of the timer-recording information data stored in the DTT memory 150, to tune the broadcasting signal to the selected digital broadcast channel at step S460.

In the case of the VCR timer-recording mode, ("No" path from decision step S455), the VCR controller 360 controls the analog broadcast receiver 310 according to the channel information data of the selected analog broadcasting signal of the timer-recording information data stored in the VCR memory 370, to tune the broadcasting signal of the selected broadcast channel at step S465.

At step S470, the VCR controller 360 controls the VCR part 300 to perform a certain signal processing to the broadcasting signal received from the DTT part 100 or from the analog broadcast receiver 310, the VCR controller 360 then records the processed signal on the recording medium in the VCR deck 350. The VCR controller 360 checks the time information and stops the recording of the broadcasting signal by controlling the VCR deck 350 according to the stop time information of the timer-recording information data.

In light of the foregoing, the combo system according to an exemplary embodiment of the present invention facilitates the timer-recording by enabling the user to set up the timer-recording function of the analog and digital broadcasting signals through the single menu screen. Thus, the hardware implementation of the combo system is simplified, and the components of the combo system are efficiently controlled with respect to the timer-recording.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image recording apparatus for receiving and storing a broadcasting signal, comprising:
a digital receiver (100) operable to receive a digital broadcasting signal;
an analog receiver (300) operable to receive an analog broadcasting signal;
a storage device (350) operable to store the digital and analog broadcasting signals; and
a controller (360) operable to output a menu screen for receiving a timer-recording information from a user, store the received timer-recording information, receive the broadcasting signal corresponding to one of the digital and analog receivers depending on the timer-recording information, and store the received broadcasting signal in the storage, wherein
the menu screen comprises a mode selection item for selecting the digital and analog broadcasting signals, and the controller selectively receives the broadcasting signal from one of the digital and analog receivers and stores the received broadcasting signal in the storage device.

2. The image recording apparatus of claim 1, wherein the menu screen further comprises items for receiving a broadcast channel, a start time, and a stop time.

3. The image recording apparatus according to claim 1 or 2, wherein the digital receiver (100) comprises:
a tuner (110) adapted to tune a channel selected by a user from among a plurality of digital broadcasting signals;
a demodulator (120) adapted to demodulate a digital broadcasting signal output from the tuner, and demultiplex the modulated signal into a video signal, an audio signal and a broadcasting information signal;
a decoder (130) adapted to decode the demultiplexed video signal, audio signal, and broadcasting information signal and output compressed video and audio signals;
a memory (150) adapted to store drivers, application programs and compressed graphic user interface data; and
a controller (140) adapted to control overall operations of the digital receiver, including controlling the tuning of the tuner, and the decoding of the decoder.

4. The image recording apparatus according to claim 3, wherein the graphic user interface data comprises a menu screen for the implementation of the graphic user interface environment.

5. The image recording apparatus according to claim 4, wherein the graphic user interface data is compressed and stored in a predetermined format comprising Moving Pictures Expert Group (MPEG) or Joint Picture Expert Group (JPEG) compression formats.

6. The image recording apparatus according to any preceding claim further comprising a digital video disc (DVD) player (200).

7. The image recording apparatus according to claim 6, wherein the digital video disc player comprises:
a DVD coder/decoder (210), a DVD signal processor (220), a DVD deck (230), a DVD controller (240), a DVD memory (250) and a DVD/VCR menu storage (260).

8. The image recording apparatus according to claim 7, wherein the DVD coder/decoder (210) is adapted to read data recorded on an inserted Compact Disc (CD) or DVD.

9. The image recording apparatus according to claim 7 or 8, wherein the DVD signal processor (220) is adapted to process data received from the DVD coder/decoder (210) and correct errors in the received data.

10. The apparatus according to any of claims 7-9, wherein the coder/decoder (210) is adapted to compress data received from the DVD player in a predetermined format to be recorded and transferred to the DVD signal processor (220) and is further adapted to reproduce received data from the DVD signal processor, and decompress and output the received data.

11. The apparatus according to claim 10, wherein the coder/decoder (210) is further adapted to decompress an output graphic user interface data compressed and stored in the memory.

12. The image recording apparatus according to any preceding claim, wherein a Video cassette recorder (VCR) comprises the analog broadcast receiver (310), a video signal switch (320), an input/output terminal (330), a VCR signal processor (340), a VCR deck (350), a VCR controller (360), a VCR memory (370) and an operation part (380).

13. The image recording apparatus according to claim 12, wherein the analog broadcast receiver is adapted to tune a channel selected from a plurality of received analog broadcast signals and demodulate the tuned broadcast signal.

14. The image recording apparatus according to claim 12 or 13, wherein the VCR deck is adapted to record data on an inserted magnetic tape or read recorded data from the magnetic tape.

15. The image recording apparatus according to any of claims 12-14, wherein the video signal switch (320) is adapted to forward to an I/O terminal (330), the video signal output from a digital terrestrial television (100), the DVD part (200), the analog broadcast receiver (310) and the VCR signal receiver (340), and is further adapted to selectively forward the video signal input from an external device through the I/O terminal to the DVD part and VCR part and signal processor.

16. The image recording apparatus according to any of claims 12-15, wherein the controller (360) is adapted to control overall operation of the apparatus, depending on operation commands input through the operation part (380), and is further adapted to communicate with a digital terrestrial television controller, the DVD controller and furthermore is adapted to control the operation of the digital terrestrial television controller and the DVD controller.

17. The image recording apparatus according to any of claims 12-16, wherein the memory (370) is adapted to store drivers and application programs required for the VCR controller and is further adapted to store critical data which should be stored upon power off.

18. The image recording apparatus according to any of claims 12-17, wherein the operation part (380)comprises a user interface adapted to receive operation commands in relation with selected function and operation control of the apparatus.

19. A method of providing a timer-recording function of an image recording apparatus which receives both digital and analog broadcasting signals and selectively stores the received broadcasting signal, the method comprising the steps of:
outputting (S415) a menu screen for receiving timer-recording information;
selecting one of the digital and analog broadcasting signals;
receiving information representing a channel and a recording time; and
storing (S430) the timer-recording information, receiving and storing the digital or analog broadcasting signal depending on the stored timer-recording information.

20. The method of claim 19 further comprising:
selecting (S460) a channel from among a plurality of digital broadcasting signals;
demodulating a digital broadcasting signal and demultiplexing the modulated signal into a video signal, an audio signal and a broadcasting information signal;
decoding the demultiplexed video signal, audio signal, and broadcasting information signal and outputting compressed video and audio signals; and
storing drivers, application programs, and compressed graphic user interface data.

21. The method of claim 20, wherein the compressed graphic user interface data is stored in a predetermined format comprising Motion Pictures Expert Group (MPEG) or Joint Picture Experts Group (JPEG) compression formats.

22. The method of any of claims 19-21, wherein the image recording apparatus comprises a digital video disc player.
